# EUROPEAN PATENT APPLICATION

(11) **EP 3 121 402 A1**
(43) Date of publication of application: **25.01.2017**
(21) Application number: 15764075.6
(22) Date of filing: 19.03.2015
(51) Int. Cl.: F01N 3/28, B01D 53/86, E02F 9/00, F01N 3/02, F01N 3/08, F01N 3/24, F01N 13/08, F02B 67/00, A01D 41/12

(54) **ENGINE DEVICE**

(30) Priority: 20.03.2014 JP 2014059107; 27.03.2014 JP 2014065694
(71) Applicant: Yanmar Co., Ltd., Osaka-shi, Osaka 530-8311 (JP)
(72) Inventor: SUETOU Hiroshi, Osaka-shi Osaka 530-8311 (JP)
(74) Representative: Hoffmann Eitle
(86) International application number: PCT/JP2015/058280
(87) International publication number: WO 2015/141788

(57) **Abstract**

It is an object to provide an engine device in which an engine 3 and an exhaust gas purification device 47 can be internally installed in a machine casing 2 such as a stationary power generation work machine 70 in a compact way while the maintenance workability on the upper surface side of the engine 3 can be improved. The engine device of the present invention of the instant application includes a first case 48 for removing particulate matter in the exhaust gas of the engine 3 and a second case 49 for removing nitride oxides in the exhaust gas of the engine 3. The second case 49 is connected to the first case 48 via a urea mixing pipe 59. A supporting stand 65 with which the first case 48, the second case 49, and the urea mixing pipe 59 are adhered in parallel is provided. The first case 48, the second case 49, and the urea mixing pipe 59 are integrally arranged on the supporting stand 65, thereby forming the exhaust gas purification device 47 having single component structure, and the exhaust gas purification device 47 is mounted on supporting leg bodies 66 provided on the engine 3.

## Description

### Technical Field

The present invention of the instant application relates to an engine device, such as a diesel engine mounted in an agricultural machine (a tractor and a combine harvester) or a construction machine (a bulldozer, a hydraulic excavator, and a loader), and the like, and more specifically relates to an engine device in which an exhaust gas purification device is mounted that removes particulate matter (soot and particulates) included in exhaust gas or nitride oxides (NOx) and the like included in the exhaust gas.

### Background Art

Regarding work vehicles such as a tractor and a wheel loader, an opening/closing fulcrum shaft is arranged in the rear portion of a hood for covering an engine, and the hood is rotated about the opening/closing fulcrum shaft, for the purpose of improving the efficiency of maintenance work for the engine arranged in the front of a travelling vehicle body. Also, a technology of purification treatment has been known theretofore, wherein a case (hereinafter referred to as "DPF case") in which a diesel particulate filter is internally installed, and a case (hereinafter referred to as "SCR case") in which a urea selective reduction catalyst is internally installed are provided in the exhaust path of a diesel engine as an exhaust gas purification device (exhaust gas after-treatment device), and the exhaust gas is introduced into the DPF case and the SCR case, thereby purifying the exhaust gas discharged from the diesel engine (for example, see Patent Literatures 1 to 4). Furthermore, there are technologies in which an air conditioning apparatus for refrigeration and an engine for driving the air conditioning apparatus are equipped in a container used for transporting chilled goods, and the internal temperature of the container is maintained at a temperature (for example, minus 20 degrees) or less, required for refrigeration of goods, and the container is coupled with a tractor, and the goods are transported in a refrigerated state (Patent Literature 5).

### Citation List

### Patent Literature

PTL 1: Japanese Unexamined Patent Application Publication No. 2009-74420
PTL 2: Japanese Unexamined Patent Application Publication No. 2012-21505
PTL 3: Japanese Unexamined Patent Application Publication No. 2013-104394
PTL 4: Japanese Unexamined Patent Application Publication No. 2012-177233
PTL 5: Japanese Unexamined Patent Application Publication No. 2008-8516

### Summary of Invention

### Technical Problem

When the DPF case and the SCR case are assembled apart from the engine, the temperature of the exhaust gas supplied from the engine to the DPF case or the SCR case is reduced, and the reproduction of the diesel particulate filter or chemical reaction such as the action of selective catalyst reduction is defectively made, which leads to a problem in that a specific device for maintaining the exhaust gas at a high temperature in the SCR case needs to be provided. Also, a technology has been disclosed wherein the DPF case and the SCR case are mounted on two parallel base frames, and the two base frames are fastened to an object to be installed, thereby mounting the DPF case and the SCR case. However, the mounting surface of the object to be installed needs to be formed horizontally (flat), and therefore there is a problem in that it is difficult to support the supporting posture of the DPF case and the SCR case at a predetermined posture due to machining errors of mounting components such as the base frame.

On the other hand, when the DPF case and the SCR case are assembled in close proximity to the engine, the temperature of the exhaust gas supplied from the engine to the SCR case is reduced, and the temperature of the exhaust gas in the SCR case is easily maintained at a high temperature, but it is necessary to secure an installation space for the SCR case on the lateral side of the engine, which leads to problems in that it is difficult to constitute a miniaturized engine room, and the DPF case, the SCR case, or the like cannot be supported in a compact way.

Furthermore, as disclosed in Patent Literature 5, in conventional technologies in which a diesel engine as a driving source for the air conditioning apparatus is mounted on the container for transporting goods, the DPF case and the SCR case can be provided on the upper portion of the diesel engine and the like, but the installation space of the diesel engine cannot be provided in a compact way. Also, the external size of the container for transporting goods is defined for each intended purpose, and therefore the external size cannot be increased, which leads to a problem in that it is necessary to reduce the carrying capacity of goods of the container, and the like.

Also, when the container is stored for a long period of time in a state where the container for transporting goods is operated, or when the container in a state of operation is transferred for a long distance, the engine is successively operated for a long period of time in a state of rotation at a relatively low speed, which leads to a problem in that the exhaust gas purification temperature of the exhaust gas purification device cannot be easily maintained at a temperature or higher at which the exhaust gas can be successively purified. When the engine is successively operated for a long period of time, an oil pan having large capacity is required. However, in consideration of the costs of molding the oil pan, there is a problem in that rigidity is deficient, and the vibration of the engine is prone to transmit.

Accordingly, it is an object of the present invention of the instant application to provide an engine device, in which improvements are provided in the light of the current circumstances.

### Solution to Problem

In order to achieve the object, an engine device of the present invention according to claim 1 includes a first case for removing particulate matter in exhaust gas of an engine, and a second case for removing nitride oxides in the exhaust gas of the engine and configured to connect the second case to the first case via a urea mixing pipe, and the engine device includes a supporting stand configured to adhere in parallel to the first case, the second case, and the urea mixing pipe, and the first case, the second case, and the urea mixing pipe are integrally arranged on the supporting stand, thereby forming an exhaust gas purification device having single component structure, and the exhaust gas purification device is mounted on supporting leg bodies provided on the engine.

Regarding the engine device described in the claim 1, the present invention according to claim 2 is such that the supporting leg bodies are projectingly installed from a lateral surface to an outer side of the engine.

Regarding the engine device described in the claim 2, the present invention according to claim 3 is such that the supporting leg bodies protrude from a left side surface of the engine to a left side of outside of the engine, and the supporting stand is detachably adhered to a protruding tip end side of the supporting leg bodies, and the exhaust gas purification device is mounted on the left side of the outside of the engine via the supporting leg bodies.

Regarding the engine device described in the claim 2, the present invention according to claim 4 is such that the supporting leg bodies protrude from a right side surface of the engine to a right side of outside of the engine, and the supporting stand is detachably adhered to a protruding tip end side of the supporting leg bodies, and the exhaust gas purification device is mounted on the right side of the outside of the engine via the supporting leg bodies.

Regarding the engine device described in the claim 1, the present invention according to claim 5 is such that the supporting leg bodies protrude downward from a lower surface side of the engine.

Regarding the engine device described in the claim 5, the present invention according to claim 6 is such that the exhaust gas purification device is mounted in a posture in which transfer direction of the exhaust gas in the exhaust gas purification device is intersected with an output shaft of the engine, and an upper end side of the supporting leg bodies is adhered to an oil pan of a lower portion of the engine, and a lower end side of the supporting leg bodies protrudes downward from the oil pan of the lower portion of the engine, and the supporting stand is detachably adhered to the lower end side of the supporting leg bodies, thereby mounting the exhaust gas purification device.

Regarding the engine device described in the claim 5, the present invention according to claim 7 is such that the exhaust gas purification device is mounted in a posture in which transfer direction of the exhaust gas in the exhaust gas purification device is parallel to an output shaft of the engine, and an upper end side of the supporting leg bodies is adhered to an oil pan of a lower portion of the engine, and a lower end side of the supporting leg bodies protrudes downward from the oil pan of the lower portion of the engine, and the supporting stand is detachably adhered to the lower end side of the supporting leg bodies, thereby mounting the exhaust gas purification device.

### Advantageous Effects of Invention

According to the present invention of the claim 1, the engine device includes a first case for removing the particulate matter in the exhaust gas of the engine, and the second case for removing the nitride oxides in the exhaust gas of the engine and configured to connect the second case to the first case via the urea mixing pipe, and the engine device includes the supporting stand configured to adhere in parallel to the first case, the second case, and the urea mixing pipe, and the first case, the second case, and the urea mixing pipe are integrally arranged on the supporting stand, thereby forming the exhaust gas purification device having single component structure, and the exhaust gas purification device is mounted on supporting leg bodies provided on the engine, so that the engine and the exhaust gas purification device having the single component structure are arranged in the same vibration system, without complicating the pipe structure with which the engine and the exhaust gas purification device having the single component structure are connected, which is contributed to reduction in costs of components.

According to the present invention of the claim 2, the supporting leg bodies are projectingly installed from the lateral surface to the outer side of the engine, so that the exhaust gas purification device is mounted on the supporting leg bodies that are projectingly installed from the lateral surface to the outside of the engine, and the upper surface side of the engine can be widely opened, and the maintenance workability on the upper surface side of the engine can be improved. The installation heights of the engine and the exhaust gas purification device can be formed low, and for example, the bulk of the machine casing formed in a quadrilateral box shape in the stationary power generation work machine can be reduced, while the engine and the exhaust gas purification device can be internally installed in the machine casing or the like in a compact way.

According to the present invention of the claim 3, the supporting leg bodies protrude from the left side surface of the engine to the left side of the outside of the engine, and the supporting stand is detachably adhered to the protruding tip end side of the supporting leg bodies, and the exhaust gas purification device is mounted on the left side of the outside of the engine via the supporting leg bodies, so that the exhaust gas purification device can be arranged opposite to the exhaust manifold provided on the left side surface of the engine, and a pipe for guiding the exhaust gas from the exhaust manifold to the exhaust gas purification device and the like can be formed so as to be short, and the exhaust gas temperature in the interior of the exhaust gas purification device can be easily maintained at a temperature or higher required for exhaust purification.

According to the present invention of the claim 4, the supporting leg bodies protrude from the right side surface of the engine to the right side of the outside of the engine, and the supporting stand is detachably adhered to the protruding tip end side of the supporting leg bodies, and the exhaust gas purification device is mounted on the right side of the outside of the engine via the supporting leg bodies, so that the exhaust gas purification device can be arranged opposite to the intake manifold provided on the right side surface of the engine, and the maintenance workability of the supercharger arranged on the side of the exhaust manifold on the left side surface of the engine, and the left lateral surface side of the engine, on which an alternator or a starter or the like is arranged, can be improved, and a harness for electrically connecting the alternator or the starter and the like can be easily installed on the left lateral surface side of the engine, which is separated from the exhaust gas purification device, thereby easily preventing the harness or the like from being burnt.

According to the present invention of the claim 5, the supporting leg bodies protrude downward from the lower surface side of the engine, so that the exhaust gas purification device is mounted on the supporting leg bodies that are projectingly installed downward from the lower surface side of the engine, and the upper surface side or the lateral side of the engine can be widely opened, and the maintenance workability on the upper surface side or the lateral side of the engine can be improved. Also, the exhaust gas purification device can be arranged at a low position with respect to the installation frame surface of the engine, and for example, the installation heights of the engine and the exhaust gas purification device are set low with respect to the chassis (the installation frame surface of the engine) of a refrigerated container vehicle, thereby setting the center of gravity of a vehicle body at a low position.

According to the present invention of the claim 6, the exhaust gas purification device is mounted in a posture in which the transfer direction of the exhaust gas in the exhaust gas purification device is intersected with the output shaft of the engine, and the upper end side of the supporting leg bodies is adhered to the oil pan of the lower portion of the engine, and the lower end side of the supporting leg bodies protrudes downward from the oil pan of the lower portion of the engine, and the supporting stand is detachably adhered to the lower end side of the supporting leg bodies, thereby mounting the exhaust gas purification device, so that the inlet on the exhaust gas intake side of the exhaust gas purification device can be arranged on the same lateral surface with respect to the outlet of the exhaust manifold on the left side surface of the engine, and a connection distance between the outlet of the exhaust manifold and the inlet of the exhaust gas purification device can be formed so as to be short, and the workability in terms of the exhaust gas pipes and the like can be improved.

According to the present invention of the claim 7, the exhaust gas purification device is mounted in a posture in which the transfer direction of the exhaust gas in the exhaust gas purification device is parallel to the output shaft of the engine, and the upper end side of the supporting leg bodies is adhered to the oil pan of the lower portion of the engine, and the lower end side of the supporting leg bodies protrudes downward from the oil pan of the lower portion of the engine, and the supporting stand is detachably adhered to the lower end side of the supporting leg bodies, thereby mounting the exhaust gas purification device, so that the inlet on the exhaust gas intake side of the exhaust gas purification device can be arranged immediately below the outlet of the exhaust manifold on the left side surface of the engine, and the exhaust gas pipe can be constituted in a simple, straight-pipe shape, and the workability in terms of the exhaust gas pipes and the like can be improved.

### Brief Description of Drawings

[Fig. 1] Fig. 1 is a perspective view of a diesel engine illustrating the first embodiment.
[Fig. 2] Fig. 2 is a front view of the diesel engine.
[Fig. 3] Fig. 3 is a plan view of the diesel engine.
[Fig. 4] Fig. 4 is a perspective view of a stationary power generation work machine.
[Fig. 5] Fig. 5 is a side view of a cross section of a machine casing.
[Fig. 6] Fig. 6 is a plan view of the cross section of a machine casing.
[Fig. 7] Fig. 7 is a perspective view of the diesel engine illustrating the second embodiment.
[Fig. 8] Fig. 8 is a front view of the diesel engine.
[Fig. 9] Fig. 9 is a first modified example of the mounting structure of the diesel engine.
[Fig. 10] Fig. 10 is a second modified example of the mounting structure of the diesel engine.
[Fig. 11] Fig. 11 is a third modified example of the mounting structure of the diesel engine.
[Fig. 12] Fig. 12 is a front view of the diesel engine mounted on a container illustrating the third embodiment.
[Fig. 13] Fig. 13 is a side view of the diesel engine mounted on the container.
[Fig. 14] Fig. 14 is a right side perspective view of the diesel engine viewed from the front side.
[Fig. 15] Fig. 15 is a left side perspective view of the diesel engine viewed from the rear side.
[Fig. 16] Fig. 16 is a right side view of the diesel engine (the installation side of an intake manifold).
[Fig. 17] Fig. 17 is a front view of the diesel engine.
[Fig. 18] Fig. 18 is a right side perspective view of the diesel engine viewed from the front side, illustrating the fourth embodiment.
[Fig. 19] Fig. 19 is a left side perspective view of the diesel engine viewed from the rear side, illustrating the fourth embodiment.

### Description of Embodiments

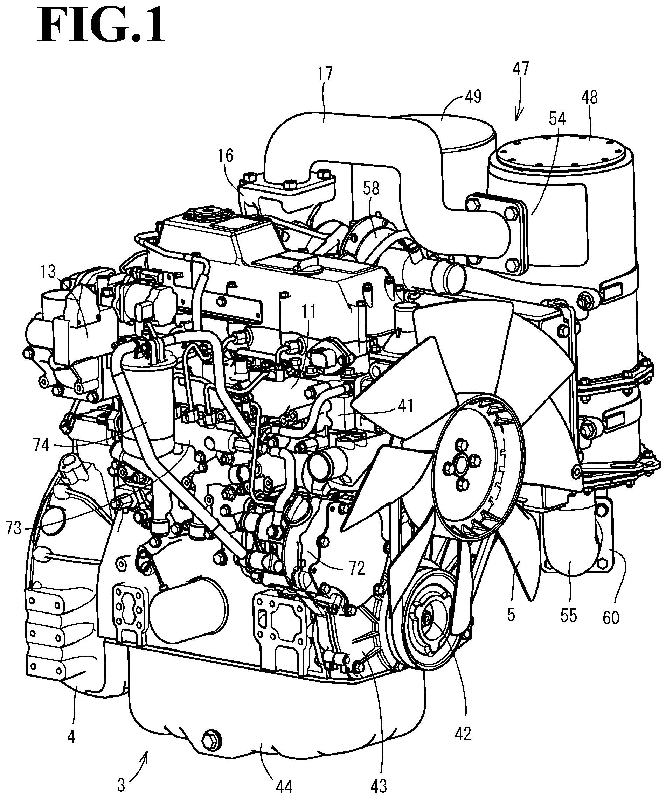

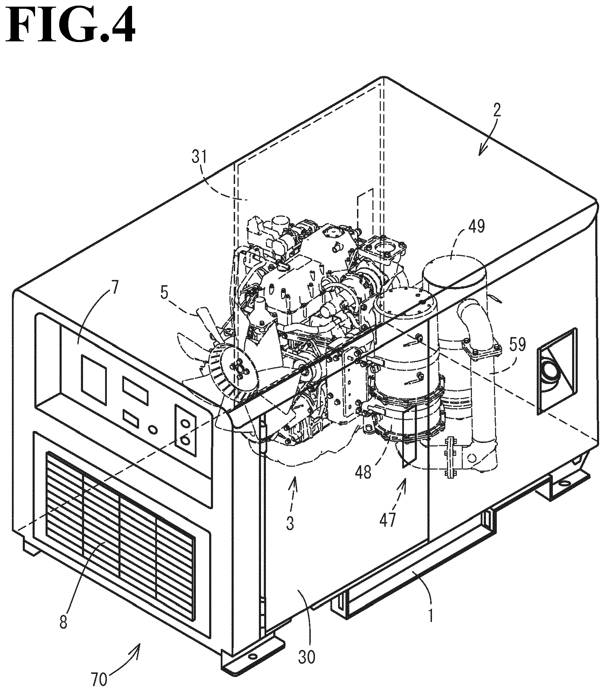

Hereinafter, an engine device of the first embodiment of the present invention of the instant application will be described based on the drawings with reference to Figs. 1 to 6. Figs. 1 to 3 are explanatory views of a diesel engine illustrating the first embodiment, and Figs. 4 to 6 are explanatory views of a stationary power generation work machine 70 in which the diesel engine and a generator are mounted.

The structure of the stationary power generation work machine 70 of the first embodiment will be described referring to Figs. 4 to 6. As illustrated in Figs. 4 to 6, a machine casing 2 formed in a quadrilateral box shape is placed on a machine casing stand 1. A diesel engine 3 is installed in the center in the interior of the machine casing 2 on the upper surface of the machine casing stand 1. A radiator 6 is arranged on the installation side of a cooling fan 5 on the front surface side of the diesel engine 3. A generator 18 described later is arranged on the rear surface side of the diesel engine 3, and an operational panel portion 7 and an outside air intake port 8 are provided on the lateral wall of the machine casing 2 on the installation side of the generator 18. A warm-up discharge port portion 9 is provided on the lateral wall of the machine casing 2 on the installation side of the radiator 6, and a fuel tank 10 for the diesel engine 3 is arranged on the upper surface of the machine casing stand 1 on the installation side of the radiator 6.

Also, an air cleaner 12 for purifying outside air and removing dust from the outside air and the exhaust gas recirculation device (EGR) 13 for recirculating part of the exhaust gas from an intake manifold 11 to each cylinder of the diesel engine 3 are provided on the installation portion of the intake manifold 11 on the right-side surface side of the diesel engine 3. The air cleaner 12 is connected to the intake manifold 11 via the exhaust gas recirculation device 13 and an intake pipe 14, and fresh air is supplied from the air cleaner 12 to the diesel engine 3. On the other hand, a supercharger 58 described later and an exhaust outlet pipe 16 are provided on the installation portion of an exhaust manifold 15 on the left-side surface side of the diesel engine 3. The exhaust outlet pipe 16 is connected to the exhaust manifold 15 via the supercharger 58, and one end side of an exhaust pipe 17 is connected to the exhaust manifold 15 via the exhaust outlet pipe 16.

The generator 18 as the work machine is mounted on a flywheel housing 4 on the rear surface side of the diesel engine 3. The driving shaft of the generator 18 is coupled with the output shaft (not illustrated) of the diesel engine 3 via a PTO clutch 19 with which the operator engages or disengages by manual operations, thereby driving the generator 18 by means of the diesel engine 3. The power of the generator 18 is configured to be supplied as a power source such as an electric apparatus at a remote place through electric cables. It is noted that, as is the same with the generator 18, a compressor or a hydraulic pump driven by the diesel engine 3 is provided, and it is possible to constitute a stationary work machine used for construction works or engineering works.

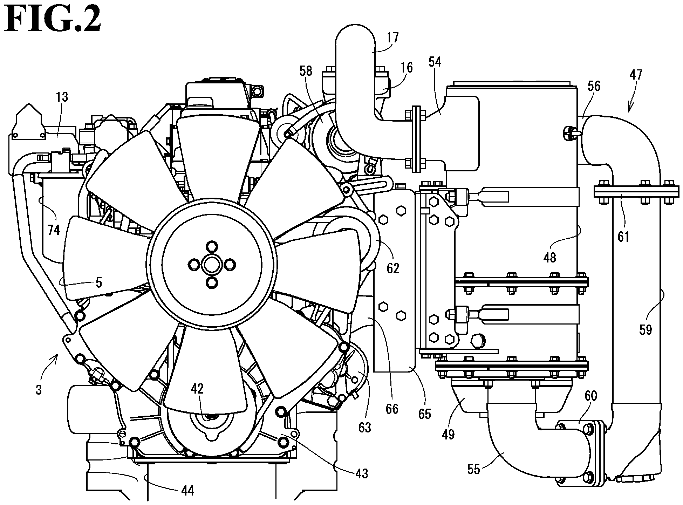

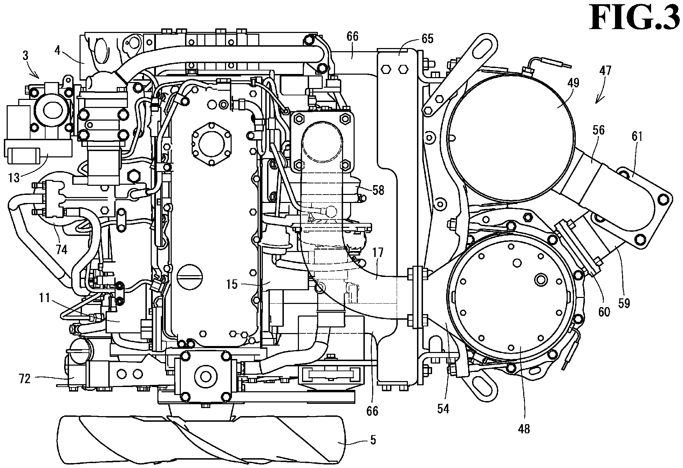

The mounting structure of the exhaust gas purification device will be described referring to Figs. 1 to 3. Fig. 1 is a right side perspective view of the diesel engine 3 in which the intake manifold 11 is installed, and Fig. 2 is a front view of the diesel engine 3 in which the cooling fan 5 is installed, and Fig. 3 is a plan view of the diesel engine 3. It is noted that a side where the exhaust manifold 15 is installed is referred to as the left lateral surface of the diesel engine 3, and a side where the intake manifold 11 is installed is referred to as the right lateral surface of the diesel engine 3, and a side where the cooling fan 5 is installed is referred to as the front surface of the diesel engine 3. The entire structure of the diesel engine 3 will be described referring to Figs. 1 to 3.

As illustrated in Figs. 1 to 3, the intake manifold 11 is arranged on the right side surface of a cylinder head 41 of the diesel engine 3, and the cylinder head 41, in which the exhaust manifold 15 is arranged on the left side surface of the cylinder head 41 of the diesel engine 3, is placed on a cylinder block 43 in which an engine output shaft 42 (crankshaft) and pistons (not illustrated) are incorporated. The front end and the rear end of the engine output shaft 42 protrude from the front surface and the rear surface of the cylinder block 43.

As illustrated in Figs. 1 to 3, the flywheel housing 4 is adhered to the rear surface of the cylinder block 43. A flywheel (not illustrated) provided in the flywheel housing 4 is pivotably supported on the rear end side of the engine output shaft 42. It is configured such that the motive power of the diesel engine 3 is taken out by the generator 18 via the flywheel. Furthermore, an oil pan 44 is arranged on the lower surface of the cylinder block 43.

Also, it is configured such that part of the exhaust gas discharged from the diesel engine 3 to the exhaust manifold 15 is recirculated from the intake manifold 11 into each cylinder of the diesel engine 3 via the exhaust gas recirculation device 13, thereby reducing the combustion temperature of the diesel engine 3, reducing the emissions of nitride oxides (NOx) from the diesel engine 3, and improving the fuel consumption of the diesel engine 3.

As illustrated in Figs. 1 to 6, the diesel engine 3 includes a first case 48 as a diesel particulate filter (DPF) that removes particulate matter in the exhaust gas of the diesel engine 3 and a second case 49 as a urea selective catalyst reduction (SCR) system that removes the nitride oxides in the exhaust gas of the diesel engine 3, as an exhaust gas purification device 47 for purifying the exhaust gas discharged from each cylinder of the diesel engine 3. It is noted that an oxidation catalyst and a soot filter, not illustrated, are internally installed in the first case 48 as a DPF case, and an SCR catalyst and an oxidation catalyst for urea selective catalyst reduction, not illustrated, are internally installed in the second case 49 as an SCR case.

The exhaust gas discharged from each cylinder of the diesel engine 3 to the exhaust manifold 15 is released to the outside by way of the exhaust gas purification device 47 and the like. It is configured such that carbon monoxide (CO), hydrocarbon (HC), particulate matter (PM), and nitride oxides (NOx) in the exhaust gas of the diesel engine 3 are reduced by means of the exhaust gas purification device 47.

The first case 48 and the second case 49 are constituted in a lateral, oblong cylindrical shape. A DPF inlet pipe 54 that takes the exhaust gas in and a DPF outlet pipe 55 that discharges the exhaust gas are provided on the cylindrical bilateral sides (one end side and the other end side of the transfer direction of the exhaust gas) of the first case 48. Similarly, an SCR inlet pipe 56 that takes the exhaust gas in and an SCR outlet pipe 57 that discharges the exhaust gas are provided on the bilateral sides (one end side and the other end side of the transfer direction of the exhaust gas) of the second case 49.

Also, the supercharger 58 that forcibly feeds air into the diesel engine 3 is arranged at the exhaust gas outlet of the exhaust manifold 15. It is configured such that the DPF inlet pipe 54 communicates with the exhaust manifold 15 via an exhaust pipe 17 connected to the exhaust outlet pipe 16 of the supercharger 58, and the exhaust gas of the diesel engine 3 is introduced into the first case 48, while a urea mixing pipe 59 that connects the SCR inlet pipe 56 to the DPF outlet pipe 55 is provided, and the exhaust gas of the first case 48 is introduced into the second case 49 via the urea mixing pipe 59. It is noted that the DPF outlet pipe 55 and the urea mixing pipe 59 are detachably connected by fastening with bolts on a DPF outlet-side flange body 60, and the SCR inlet pipe 56 and the urea mixing pipe 59 are detachably connected with an SCR inlet-side flange body 61.

Furthermore, a supporting stand 65 with which the first case 48, the second case 49, and the urea mixing pipe 59 are arranged in parallel is provided. The first case 48, the second case 49, and the urea mixing pipe 59 are integrally fixed with the supporting stand 65, thereby forming the exhaust gas purification device 47 having single component structure. The base end portions of the plurality of supporting leg bodies 66 are detachably fastened and fixed on the left side surface of the diesel engine 3 (the cylinder head 41 and the cylinder block 43), and the tip end sides of the plurality of supporting leg bodies 66 are protruded from the left side surface to the outer left side of the diesel engine 3, and the supporting stand 65 is detachably fastened and fixed on the tip end sides of the plurality of supporting leg bodies 66.

That is, the supporting stand 65 with which the first case 48, the second case 49, and the urea mixing pipe 59 are adhered in parallel is provided, and the first case 48, the second case 49, and the urea mixing pipe 59 are integrally arranged on the supporting stand 65, thereby forming the exhaust gas purification device 47 having single component structure, and the exhaust gas purification device 47 is mounted on the supporting leg bodies 66 projectingly installed from lateral surface to the outside of the diesel engine 3, and the supporting leg bodies 66 are protruded from the left side surface to the left side of the outside of the diesel engine 3, and the supporting stand 65 is detachably adhered on the protruding tip end sides of the supporting leg bodies 66, and the exhaust gas purification device 47 is mounted on the left side of the outside of the diesel engine 3 via the supporting leg bodies 66.

As illustrated in Fig. 1, a fuel pump 72 and a common rail 73 that are connected to the fuel tank 10 are provided in respective injectors (not illustrated) corresponding to the multi cylinders of the diesel engine 3 (the cylinder head 41). The common rail 73 and a fuel filter 74 are arranged on the installation side (the right side surface of the diesel engine 3) of the intake manifold 11 of the cylinder head 41, and the fuel pump 72 is arranged in the cylinder block 43 below the intake manifold 11. The fuel in the fuel tank 10 is drawn in by the fuel pump 72 via the fuel filter 74, while the common rail 73 is connected to the discharge side of the fuel pump 72, and the cylindrical common rail 73 is connected to each injector of the diesel engine 3. Also, an alternator or a starter along with the supercharger 58 is arranged on the installation side of the exhaust manifold 15 on the left side surface of the diesel engine 3.

With the aforementioned constitution, the fuel in the fuel tank 10 is pressured-fed to the common rail 73 by means of the fuel pump 72, and the high-pressure fuel in the common rail 73 is stored, and the fuel injection valves of the injectors are respectively controlled in an openable/closable manner, thereby injecting the high-pressure fuel in the common rail 73 into each cylinder of the diesel engine 3. That is, the fuel injection valve of each injector is electronically controlled, so that the injection pressure, injection time, and injection period (injection amount) of the fuel can be controlled with high accuracy. Accordingly, the nitride oxides (NOx) discharged from the diesel engine 3 can be reduced.

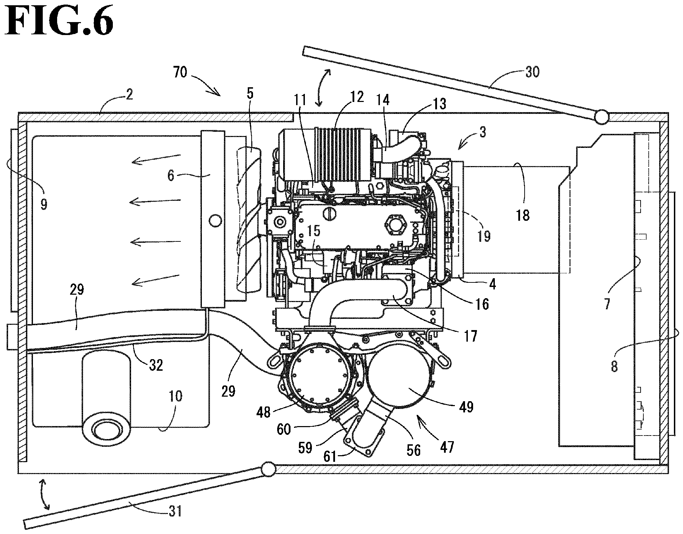

It is noted that, as illustrated in Fig. 6, a first door 30 and a second door 31 are provided in an openable/closable manner on the opposite lateral walls of the machine casing 2, and the first door 30 is arranged facing the installation portion of the air cleaner 12, and the second door 31 is arranged facing the installation portion of the exhaust gas purification device 47, and the maintenance work of the air cleaner 12 or the exhaust gas purification device 47 or the like is performed. It can be configured such that an operator can come in or out of the interior of the machine casing 2 through the first door 30 or the second door 31.

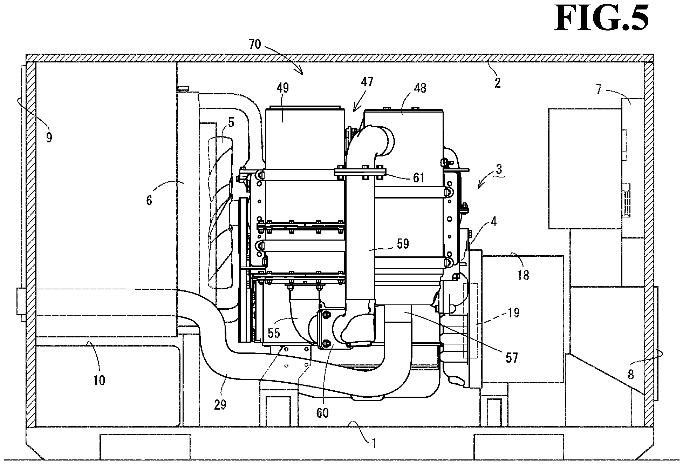

Also, as illustrated in Fig. 6, a cooling air guide plate 32 is provided between the radiator 6 and the warm-up discharge port portion 9, and the cooling air of the diesel engine 3 is guided with the cooling air guide plate 32 from the side of the diesel engine 3 to the warm-up discharge port portion 9 via the radiator 6, thereby preventing the reduction in the temperature of the exhaust gas purification device 47 due to the cooling air of the diesel engine 3. As illustrated in Figs. 5 and 6, one end side of a tail pipe 29 is connected to the SCR outlet pipe 57, and the other end side of the tail pipe 29 is extended to the lateral wall portion of the machine casing 2, in which the warm-up discharge port portion 9 is formed, through a cooling air discharge path formed by the cooling air guide plate 32, and the temperature of the exhaust gas in the tail pipe 29 is configured to be capable of being reduced with the cooling air discharge path.

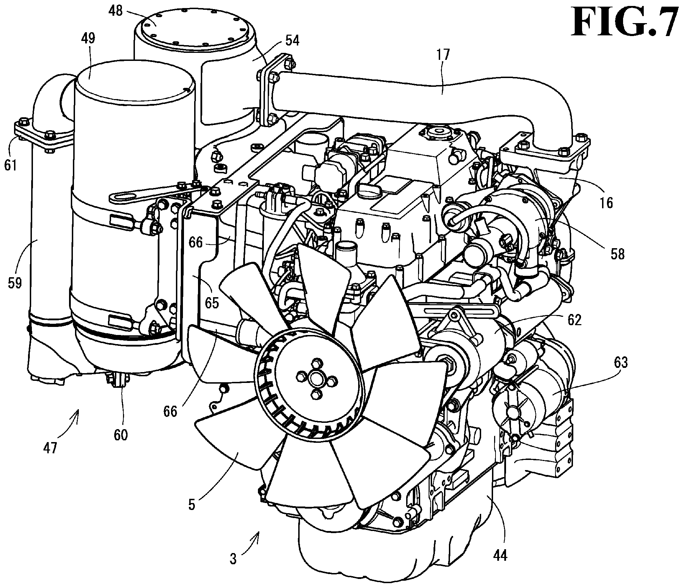

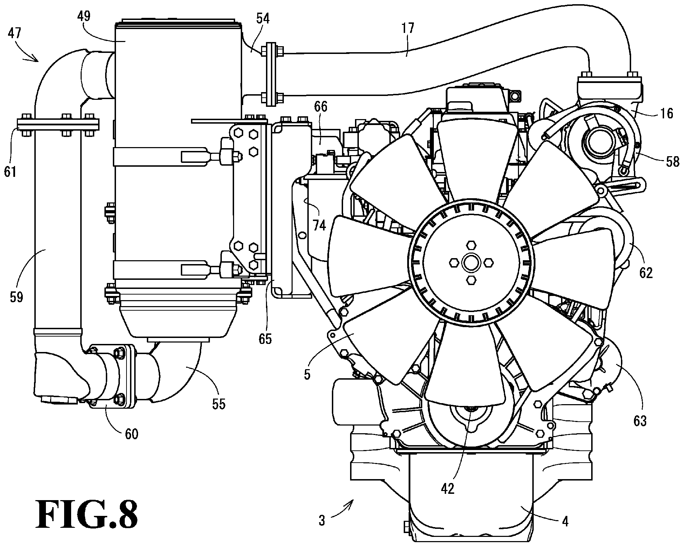

Next, the mounting structure of the exhaust gas purification device 47, which illustrates a second embodiment, will be described referring to Figs. 7 and 8. The exhaust gas purification device 47 may be arranged on the right side surface of the diesel engine 3 in place of the first embodiment in which the exhaust gas purification device 47 is arranged on the left side surface of the diesel engine 3. That is, as illustrated in Figs. 7 and 8, the plurality of supporting leg bodies 66 are protruded from the right side surface to the right side of the outside of the diesel engine 3, and the supporting stand 65 is detachably adhered on the protruding tip end sides of the supporting leg bodies 66, and the exhaust gas purification device 47 is mounted on the right side of the outside of the diesel engine 3 via the supporting leg bodies 66.

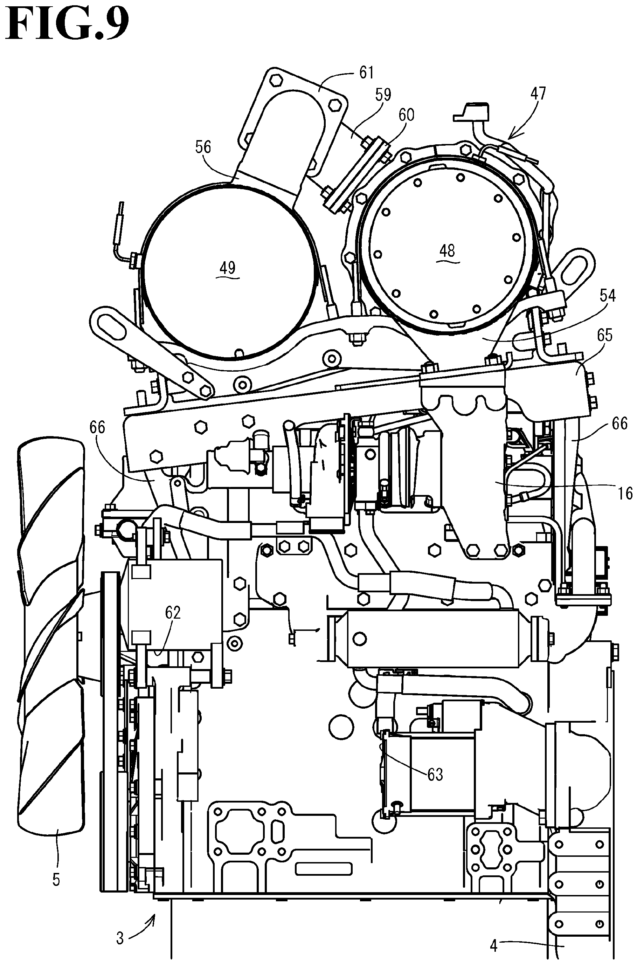

Next, the modified example of the mounting structure of the exhaust gas purification device 47 arranged on the upper surface side of the diesel engine 3 will be described referring to Figs. 9 to 11. As illustrated in Fig. 9, it may be constituted such that the supporting stand 65 is inclined in a posture in which the front thereof is positioned low while the rear thereof is positioned high and mounted on the upper surface side of the diesel engine 3 via the supporting leg bodies 66, and the exhaust gas purification device 47 is inclined in a posture in which the front thereof is positioned low while the rear thereof is positioned high and arranged on the upper surface side of the diesel engine 3, and the second case 49 on the front side of the diesel engine 3 is supported low, and the first case 48 on the rear side of the diesel engine 3 is supported high, and the wind of the cooling fan 5 is oriented to the upper surface side of the supporting stand 65 in a guidable manner.

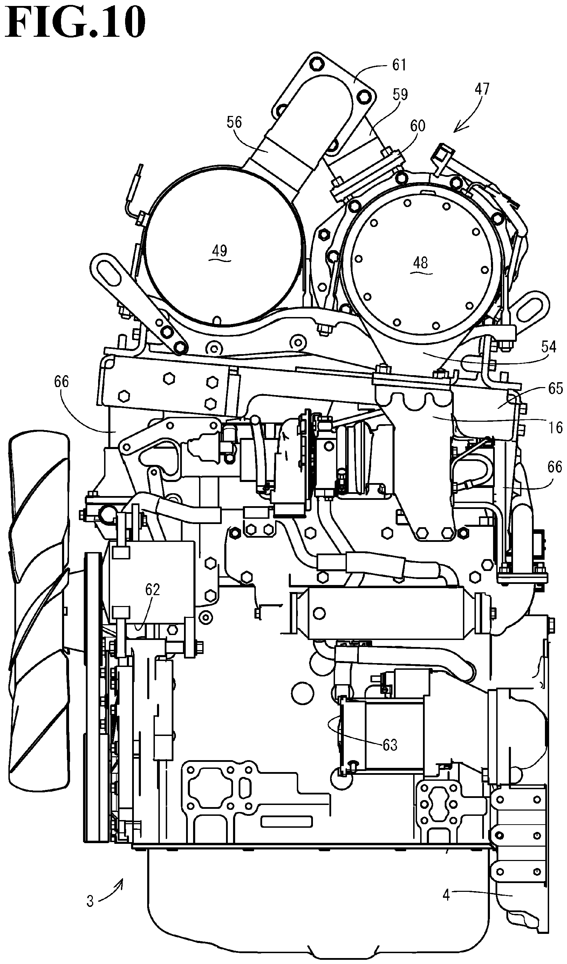

Also, as illustrated in Fig. 10, it may be constituted such that the supporting stand 65 is inclined in a posture in which the front thereof is positioned high while the rear thereof is positioned low and mounted on the upper surface side of the diesel engine 3 via the supporting leg bodies 66, and the exhaust gas purification device 47 is inclined in a posture in which the front thereof is positioned high while the rear thereof is positioned low, and arranged on the upper surface side of the diesel engine 3, and the second case 49 on the front side of the diesel engine 3 is supported high, and the first case 48 on the rear side of the diesel engine 3 is supported low, and the wind of the cooling fan 5 is oriented to the lower surface side of the supporting stand 65 in a guidable manner.

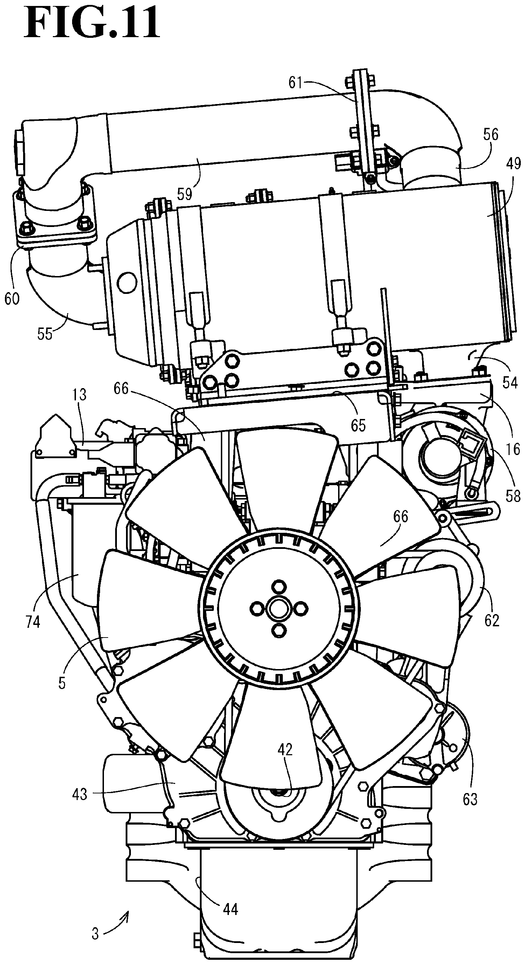

Furthermore, as illustrated in Fig. 11, it may be such that the supporting stand 65 is inclined in the right-and-left direction and mounted on the upper surface side of the diesel engine 3 via the supporting leg bodies 66, and the exhaust gas purification device 47 is inclined in the right-and-left direction and arranged on the upper surface side of the diesel engine 3.

As illustrated in Figs. 1 to 6, regarding the engine device that includes the first case 48 that removes the particulate matter in the exhaust gas of the diesel engine 3 and the second case 49 that removes the nitride oxides in the exhaust gas of the diesel engine 3 and that connects the first case 48 to the second case 49 via the urea mixing pipe 59, the engine device includes the supporting stand 65 with which the first case 48, the second case 49, and the urea mixing pipe 59 are adhered in parallel, and the first case 48, the second case 49, and the urea mixing pipe 59 are integrally arranged on the supporting stand 65, and the exhaust gas purification device 47 having single component structure is formed, and the exhaust gas purification device 47 is mounted on the supporting leg bodies 66 that are projectingly installed from the lateral surface to the outside of the diesel engine 3. Accordingly, the upper surface side of the diesel engine 3 can be widely opened, and the maintenance workability on the upper surface side of the diesel engine 3 can be improved. The installation heights of the diesel engine 3 and the exhaust gas purification device 47 can be formed low, and for example, the bulk of the machine casing 2 formed in a quadrilateral box shape in the stationary power generation work machine 70 can be reduced, while the diesel engine 3 and the exhaust gas purification device 47 can be internally installed in the machine casing 2 or the like in a compact way.

As illustrated in Figs. 1 to 6, the supporting leg bodies 66 are protruded from the left side surface to the left side of the outside of the diesel engine 3, and the supporting stand 65 is detachably adhered on the protruding tip end sides of the supporting leg bodies 66, and the exhaust gas purification device 47 is mounted on the left side of the outside of the diesel engine 3 via the supporting leg bodies 66. Accordingly, the exhaust gas purification device 47 can be arranged opposite to the exhaust manifold 15 provided on the left side surface of the diesel engine 3, and a pipe (exhaust pipe 17) for guiding the exhaust gas from the exhaust manifold 15 to the exhaust gas purification device 47 and the like can be formed so as to be short, and the exhaust gas temperature in the interior of the exhaust gas purification device 47 can be easily maintained at a temperature or higer required for exhaust purification.

As illustrated in Figs. 7 and 8, the supporting leg bodies 66 are protruded from the right side surface to the right side of the outside of the diesel engine 3, and the supporting stand 65 is detachably adhered on the protruding tip end sides of the supporting leg bodies 66, and the exhaust gas purification device 47 is mounted on the right side of the outside of the diesel engine 3 via the supporting leg bodies 66. Accordingly, the exhaust gas purification device 47 can be arranged opposite to the intake manifold 11 provided on the right side surface of the diesel engine 3, and the maintenance workability of the supercharger 58 arranged on the side of the exhaust manifold 15 on the left side surface of the diesel engine 3, and the left lateral surface side of the diesel engine 3, on which an alternator 62 or a starter 63 or the like is arranged, can be improved, and as illustrated in Fig. 7, a harness for electrically connecting the alternator 62 or the starter 63 and the like can be easily installed on the left lateral surface side of the diesel engine 3, which is separated from the exhaust gas purification device 47, thereby easily preventing the harness or the like from being burnt.

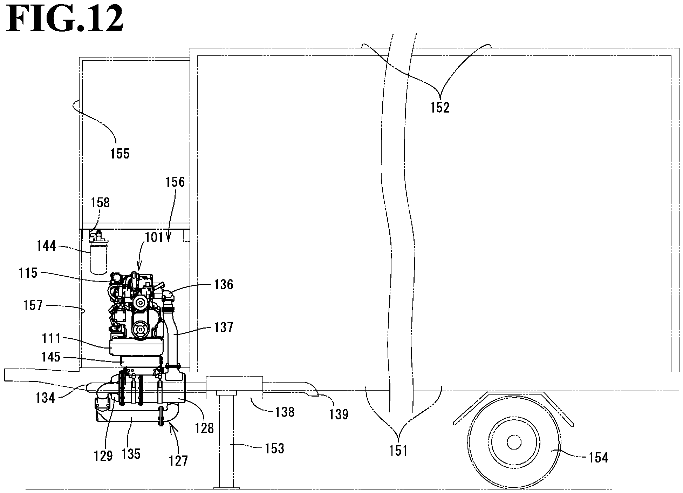

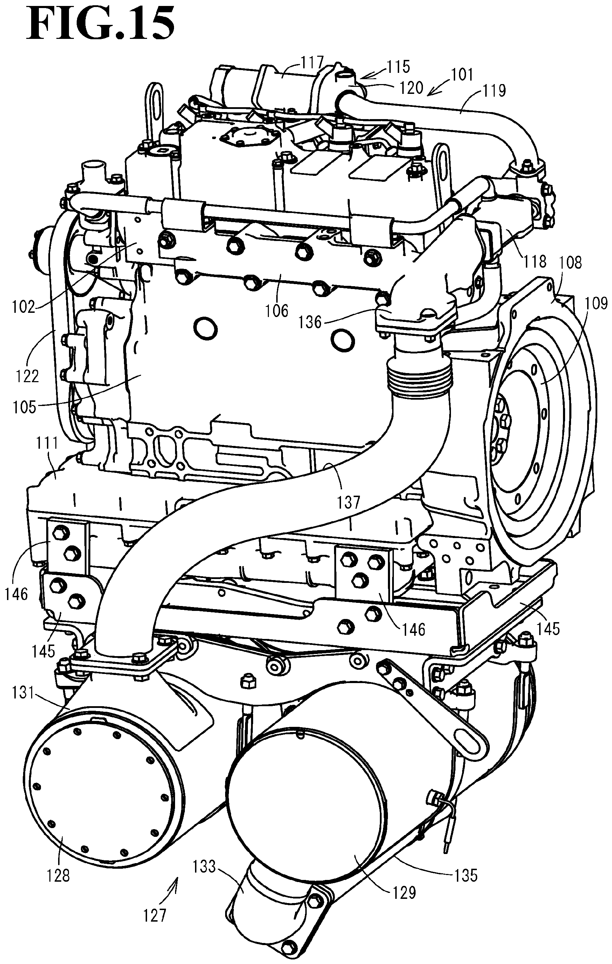

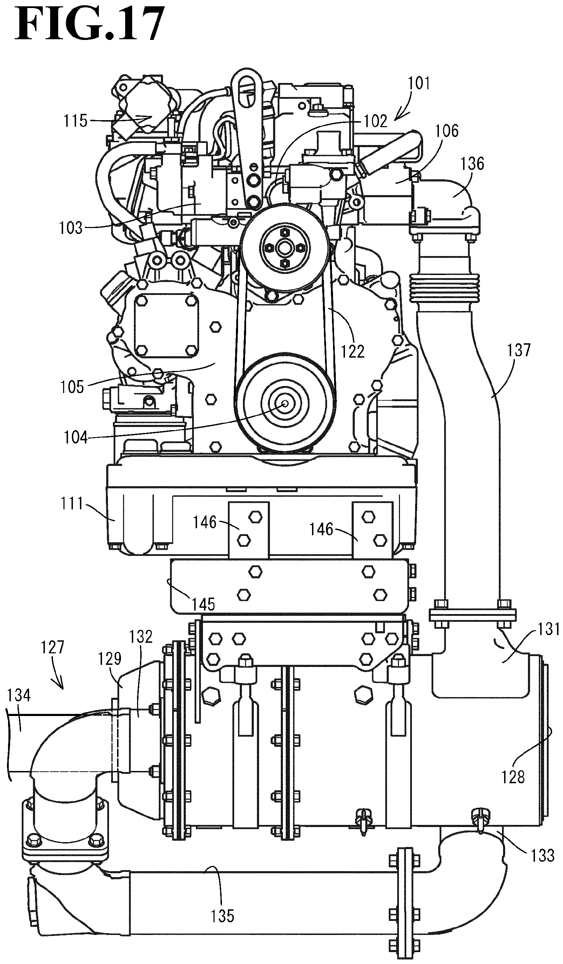

Next, the entire structure of a diesel engine 101 according to a third embodiment will be described referring to FIGs. 12 to 17. It is noted that, in the description below, the installation side of the intake manifold of the diesel engine 101 is merely referred to as "right side" of the diesel engine 101, and similarly the installation side of the exhaust manifold of the diesel engine 101 is merely referred to as "left side" of the diesel engine 101.

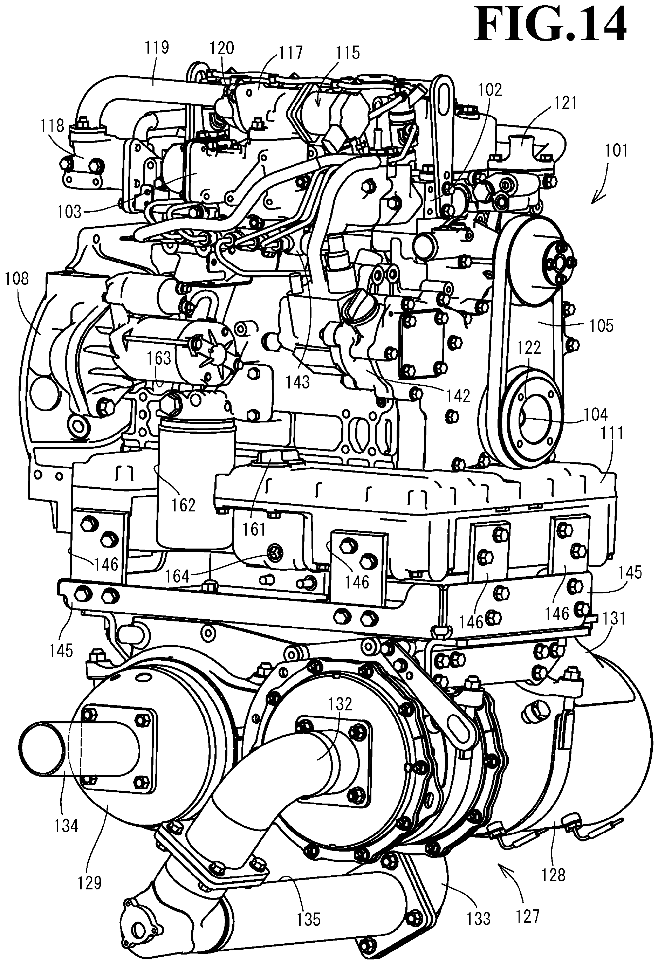

As illustrated in Figs. 14 to 16, an intake manifold 103 is arranged on the right side surface of a cylinder head 102 of the diesel engine 101. The cylinder head 102 is mounted on a cylinder block 105 in which an engine output shaft 104 (crankshaft) and pistons (not illustrated) are incorporated. An exhaust manifold 106 is arranged on the left side surface of the cylinder head 102. The front end and the rear end of the engine output shaft 104 protrude from the front surface and the rear surface of the cylinder block 105.

As illustrated in Figs. 14 to 17, a flywheel housing 108 is adhered to the rear surface of the cylinder block 105. A flywheel 109 is provided in the flywheel housing 108. The flywheel 109 is pivotably supported on the rear end side of the engine output shaft 104. Also, a compressor 107 for compressing a refrigerant is provided as the air conditioning apparatus. The compressor 107 is adhered to the flywheel housing 108. It is configured such that the motive power of the diesel engine 101 is taken out to the compressor 107 via the flywheel 109.

Furthermore, an oil pan 111 is arranged on the lower surface of the cylinder block 105. The flat top area of the oil pan 111 is formed larger than the flat base area of the cylinder block 105. That is, it is configured such that the right and left side portions of the oil pan 111 are protruded on the outside with respect to the right and left side surfaces of the cylinder block 105, and the front portion of the oil pan 111 is protruded forward with respect to the front surface of the cylinder block 105, and the oil storage capacity of the oil pan 111 is substantially increased, and a large quantity of engine oil (not illustrated) is stored in the oil pan 111, and the shortage of the engine oil is prevented during the long-duration successive operation of the diesel engine 101.

As illustrated in Figs. 14 to 17, an exhaust gas recirculation device (EGR) 115 that takes in the exhaust gas for recirculation is arranged on the intake manifold 103. An air cleaner (not illustrated) is connected to the intake manifold 103. It is configured such that outside air that is purified by removing dust by means of the air cleaner is delivered to the intake manifold 103 and supplied to each cylinder of the diesel engine 101.

Also, the exhaust gas recirculation device 115 includes an EGR main body case (collector) 117 that mixes the recirculation exhaust gas (EGR gas from the exhaust manifold 106) of the diesel engine 101 with the fresh air (the outside air from the air cleaner) and supplies the mixed air to the intake manifold 103, a recirculation exhaust gas pipe 119 connected, as a recirculation joint body, to the exhaust manifold 106 via an EGR cooler 118 as an exhaust gas cooling means for recirculation, and an EGR valve 120 for adjusting the intake amount of recirculation exhaust gas. It is noted that an intake throttle valve (not illustrated) for adjusting the intake amount of fresh air is incorporated in the EGR main body case 117.

With the aforementioned constitution, the EGR main body case 117 communicates with the recirculation exhaust gas pipe 119 via the EGR valve 120, and part of the exhaust gas discharged from the diesel engine 101 to the exhaust manifold 106 is recirculated from the intake manifold 103 into the diesel engine 101, thereby reducing the combustion temperature of the diesel engine 101, reducing the emissions of nitride oxides (NOx) from the diesel engine 101, and improving the fuel consumption of the four-cylinder diesel engine 101.

It is noted that a coolant pump 121 for circulating a coolant in the cylinder block 105 and a radiator (not illustrated) is provided. The coolant pump 121 is arranged on the front surface of the diesel engine 101. The coolant pump 121 is coupled with the front end portion of the engine output shaft 104 via a V belt 122 and the like, thereby driving the coolant pump 121. On the other hand, the EGR cooler 118 is connected to the coolant pump 121 via a coolant pipe 123. It is configured such that the coolant is delivered from the coolant pump 121 into the cylinder block 105 via the EGR cooler 118.

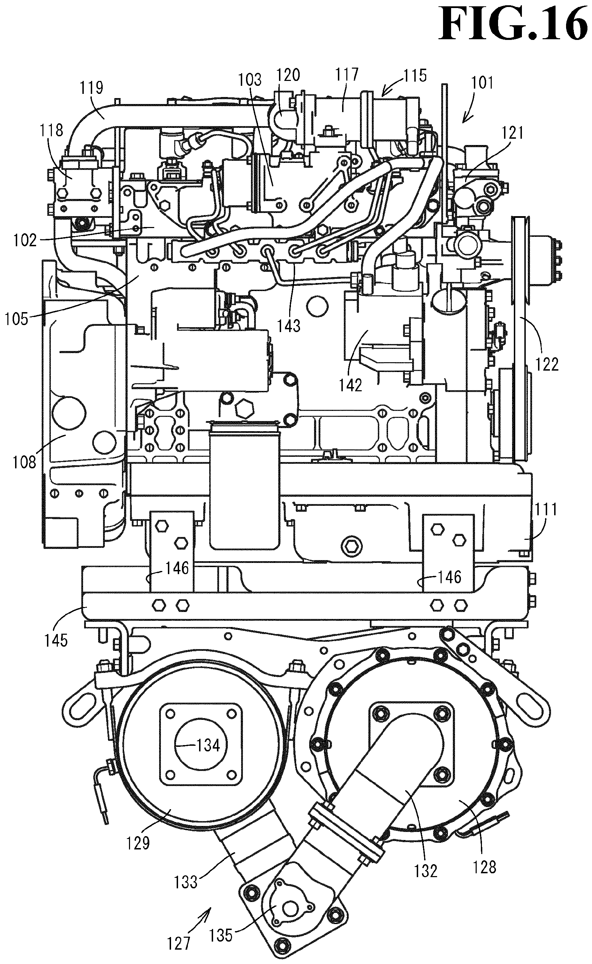

Next, the fuel system structure of the diesel engine 101 will be described referring to Figs. 14 and 16. As illustrated in Figs. 14 and 16, a fuel pump 142 and a common rail 143 that connect a fuel tank (not illustrated) to respective injectors (not illustrated) corresponding to the four cylinders provided in the diesel engine 101 are provided. The injector includes a fuel injection valve (not illustrated) of an electromagnetic opening/closing control type. The common rail 143 is adhered to the right side surface of the cylinder head 102, and the common rail 143 is arranged in close proximity to the lower side of the intake manifold 103, and the common rail 143 is provided in close proximity to the intake manifold 103 and the exhaust gas recirculation device 115.

With the aforementioned constitution, the fuel in the fuel tank is pressured-fed to the common rail 143 by means of the fuel pump 142, and the high-pressure fuel in the common rail 143 is stored. The fuel injection valves of the injectors 141 are respectively controlled in an openable/closable manner, thereby injecting the high-pressure fuel in the common rail 143 into each cylinder of the diesel engine 101. That is, the fuel injection valve of each injector is electronically controlled, so that the injection pressure, injection time, and injection period (injection amount) of the fuel supplied from each injector 141 can be controlled with high accuracy, and the nitride oxides (NOx) discharged from the diesel engine 101 can be reduced.

Next, the exhaust gas purification structure of the diesel engine 101 will be described referring to Figs 12 to 17. As illustrated in Figs. 14 to 17, the diesel engine 101 includes an exhaust gas purification device 127 for purifying the exhaust gas discharged from each cylinder of the diesel engine 101. It is configured such that, regarding the exhaust gas discharged from each cylinder of the diesel engine 101 to the exhaust manifold 106, carbon monoxide (CO), hydrocarbon (HC), and particulate matter (PM) in the exhaust gas of the diesel engine 101 are reduced by way of the exhaust gas purification device 127 and the like.

As illustrated in Figs. 12 to 17, the diesel engine 101 includes a first case 128 as a diesel particulate filter (DPF) that removes particulate matter in the exhaust gas of the diesel engine 101 and a second case 129 as a urea selective catalyst reduction (SCR) system that removes the nitride oxides in the exhaust gas of the diesel engine 101, as the exhaust gas purification device 127 for purifying the exhaust gas discharged from each cylinder of the diesel engine 101. It is noted that an oxidation catalyst and a soot filter, not illustrated, are internally installed in the first case 128 as a DPF case, and an SCR catalyst and an oxidation catalyst for urea selective catalyst reduction, not illustrated, are internally installed in the second case 129 as an SCR case.

The exhaust gas discharged from each cylinder of the diesel engine 101 to the exhaust manifold 106 is released to the outside by way of the exhaust gas purification device 127 and the like. It is configured such that carbon monoxide (CO), hydrocarbon (HC), particulate matter (PM), and nitride oxides (NOx) in the exhaust gas of the diesel engine 101 are reduced by means of the exhaust gas purification device 127.

The first case 128 and the second case 129 are constituted in a lateral, oblong cylindrical shape. A DPF inlet pipe 131 that takes the exhaust gas in and a DPF outlet pipe 132 that discharges the exhaust gas are provided on the cylindrical bilateral sides (one end side and the other end side of the transfer direction of the exhaust gas) of the first case 128. Similarly, an SCR inlet pipe 133 that takes the exhaust gas in and an SCR outlet pipe 134 that discharges the exhaust gas are provided on the bilateral sides (one end side and the other end side of the transfer direction of the exhaust gas) of the second case 129.

Also, it is configured such that an exhaust pipe 137 is connected to an exhaust gas outlet pipe 136 of the exhaust manifold 106, and the DPF inlet pipe 131 communicates with the exhaust manifold 106 via the exhaust pipe 137, and the exhaust gas of the diesel engine 101 is introduced into the first case 128, while a urea mixing pipe 135 that connects the SCR inlet pipe 133 to the DPF outlet pipe 132 is provided, and the exhaust gas of the first case 128 is introduced into the second case 129 via the urea mixing pipe 135. It is noted that the DPF outlet pipe 132 and the urea mixing pipe 135 are detachably connected with a flange body, and the SCR inlet pipe 133 and the urea mixing pipe 135 are detachably connected with a flange body.

Furthermore, a supporting stand 145 with which the first case 128, the second case 129, and the urea mixing pipe 135 are arranged in parallel is provided. The first case 128, the second case 129, and the urea mixing pipe 135 are integrally fixed with the supporting stand 145, thereby forming the exhaust gas purification device 127 having single component structure. The upper end portions of a plurality of supporting leg bodies 146 are detachably fastened and fixed on the side surface of the diesel engine 101 (the oil pan 111), and the lower end sides of the plurality of supporting leg bodies 146 are protruded downward from the lower surface side of the diesel engine 101, and the supporting stand 145 is detachably fastened and fixed on the lower end portions of the plurality of supporting leg bodies 146. That is, the exhaust gas purification device 127 is arranged in close proximity to the lower surface of the oil pan 111.

That is, the supporting stand 145 with which the first case 128, the second case 129, and the urea mixing pipe 135 are adhered in parallel is provided, and the first case 128, the second case 129, and the urea mixing pipe 135 are integrally arranged on the supporting stand 145, thereby forming the exhaust gas purification device 127 having single component structure, and the exhaust gas purification device 127 is mounted on the supporting leg bodies 146 projectingly installed from the lower surface side to the lower side of the diesel engine 101, and the supporting leg bodies 146 are protruded from the oil pan 111 to the lower side, and the supporting stand 145 is detachably adhered on the protruding lower tip end sides of the supporting leg bodies 146, and the exhaust gas purification device 127 is mounted on the lower surface side of the oil pan 111 via the supporting leg bodies 146.

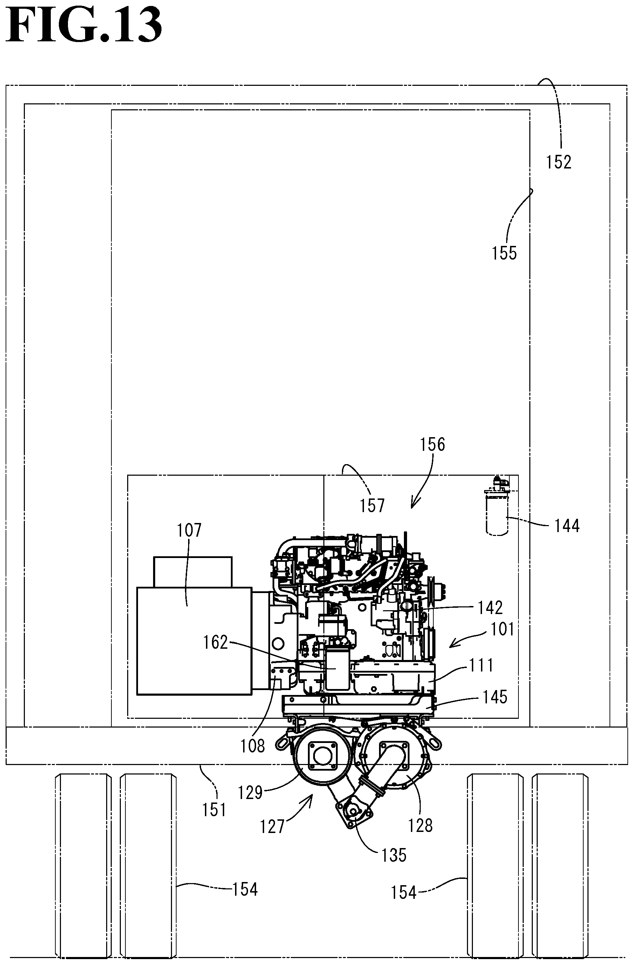

Next, the example of practical use of the diesel engine 101 will be described referring to Figs. 12 and 13. As illustrated in Figs. 12 and 13, a chilled transport container 152 for transporting freight, which is formed in a quadrilateral box shape and used for transporting chilled goods and the like, is mounted on a trailer vehicle body 151 that is hauled by a hauling vehicle (not illustrated). The trailer vehicle body 151 is horizontally supported with contractible front portion supporting leg bodies 153 and rear wheels 154 and stored in a constant place, while it is configured such that the front portion supporting leg bodies 153 are stored, and the front portion of the trailer vehicle body 151 is coupled with the rear portion of the hauling vehicle, and the trailer vehicle body 151 is hauled by the hauling vehicle.

Also, an air conditioning housing 155 for an air conditioning apparatus is provided on the front surface portion of the freight transport container 152. An air conditioning apparatus (not illustrated) that controls temperatures in the container 152 is internally installed in the air conditioning housing 155. An engine room 156 is formed below the air conditioning housing 155. The diesel engine 101 and the compressor 107, which is part of the air conditioning apparatus, are installed in the engine room 156. It is configured such that the compressor 107 is activated by the diesel engine 101, and the refrigerant of the air conditioning apparatus is compressed with the compressor 107, thereby maintaining the temperature in the freight transport container 152 at refrigerated temperatures (minus 20 degrees and the like) that are suitable for preservation of chilled goods. As illustrated in Fig. 12, it is configured such that a fuel filter 144 is arranged on the side of a machine frame 158 of the air conditioning housing 155 in which the diesel engine 101 is installed, and the fuel filter 144 is supported on the upper portion of the engine room 156, and the fuel filter 144 is connected to the fuel pump 142 of the diesel engine 101.

As illustrated in Figs. 12 and 13, a maintenance door 157 is provided in an openable/closable manner on the front surface portion of the engine room 156. It is configured such that the door 157 is actuated and opened, thereby opening the front surface of the engine room 156 forward. Also, the front surface of the diesel engine 101 is oriented in the left-side direction of the freight transport container 152, and the diesel engine 101 is arranged on the right side of the engine room 156 with respect to the front surface of the freight transport container 152, and the compressor 107 is arranged on the left side of the engine room 156. That is, it is configured in such a manner that the right side surface of the diesel engine 101 and the right side surface of the compressor 107 face the opening of the front surface of the engine room 156.

Furthermore, as illustrated in Figs. 12 and 13, the EGR valve 120 as an exhaust gas recirculation valve and the common rail 143 are arranged on the installation side of the intake manifold 103 on the right side of the diesel engine 101, and the EGR cooler 118 as the an exhaust gas cooling means for cooling the recirculation exhaust gas is provided on the lateral surface of the diesel engine 101 adjacent to the installation side of the intake manifold 103, and the installation side of the intake manifold 103 of the diesel engine 101 faces the maintenance door 157 of the engine room 156 in which the diesel engine 101 is internally installed.

Also, as illustrated in Figs. 13 and 14, an engine oil supply lid 161 that blocks an oil supply port on the upper surface of the oil pan 111, a filter 162 for filtering the engine oil, a starter 163 for starting the diesel engine 101, and the fuel pump 142 are provided on the installation side of the intake manifold 103 of the diesel engine 101. It is noted that a drain cap 164 for draining the oil in the oil pan 111 is provided at the lower portion on the lateral surface on the installation side of the intake manifold 103, on the lateral surface of the oil pan 111.

With the aforementioned constitution, an operator in the front portion of the trailer vehicle body 151 can perform maintenance inspection work for the EGR valve 120, the common rail 143, and the EGR cooler 118 from the opening side (the maintenance door 157) of the front surface of the engine room 156. In contrast, engine oil supply work for supplying the oil into the oil supply port for opening/closing the engine oil supply lid 161, replacement work for the engine oil filter 162, and maintenance inspection work for the starter 163, the fuel pump 142, the injectors 141, or the like can be performed from the opening side (the maintenance door 157) of the front surface of the engine room 156 in a similar manner as described above.

As illustrated in Figs. 14 to 17, regarding the engine device that includes the first case 128 that removes the particulate matter in the exhaust gas of the diesel engine 101 and the second case 129 that removes the nitride oxides in the exhaust gas of the diesel engine 101 and that connects the first case 128 to the second case 129 via the urea mixing pipe 135, the engine device includes the supporting stand 145 with which the first case 128, the second case 129, and the urea mixing pipe 135 are adhered in parallel, and the first case 128, the second case 129, and the urea mixing pipe 135 are integrally arranged on the supporting stand 145, and the exhaust gas purification device 127 having single component structure is formed, and the exhaust gas purification device 127 is mounted on the supporting leg bodies 146 that are projectingly installed downward from the lower surface side of the diesel engine 101. Accordingly, the upper surface side or the lateral side of the diesel engine 101 can be widely opened, and the maintenance workability on the upper surface side or the lateral side of the diesel engine 101 can be improved. Also, the exhaust gas purification device 127 can be arranged at a low position with respect to the installation frame surface of the diesel engine 101, and for example, the installation heights of the diesel engine 101 and the exhaust gas purification device 127 are set low with respect to the chassis (the installation frame surface of the engine) of a refrigerated container vehicle such as the trailer vehicle body 151, thereby setting the center of gravity of a vehicle body at a low position.

As illustrated in Figs. 14 to 17, the exhaust gas purification device 127 is mounted in a posture in which the transfer direction of the exhaust gas in the exhaust gas purification device 127 is intersected with the output shaft 104 of the diesel engine 101, and the upper end sides of the supporting leg bodies 146 are adhered to the oil pan 111 of the lower portion of the diesel engine 101, and the lower end sides of the supporting leg bodies 146 protrude downward from the oil pan 111 of the lower portion of the diesel engine 101, and the supporting stand 145 is detachably adhered to the lower end side of the supporting leg bodies 146, thereby mounting the exhaust gas purification device 127. Accordingly, the inlet on the exhaust gas intake side of the exhaust gas purification device 127 can be arranged on the same lateral surface with respect to the outlet of the exhaust manifold 106 on the left side surface of the diesel engine 101, and a connection distance between the outlet of the exhaust manifold 106 and the inlet of the exhaust gas purification device 127 can be formed so as to be short, and the workability in terms of the exhaust gas pipes and the like can be improved.

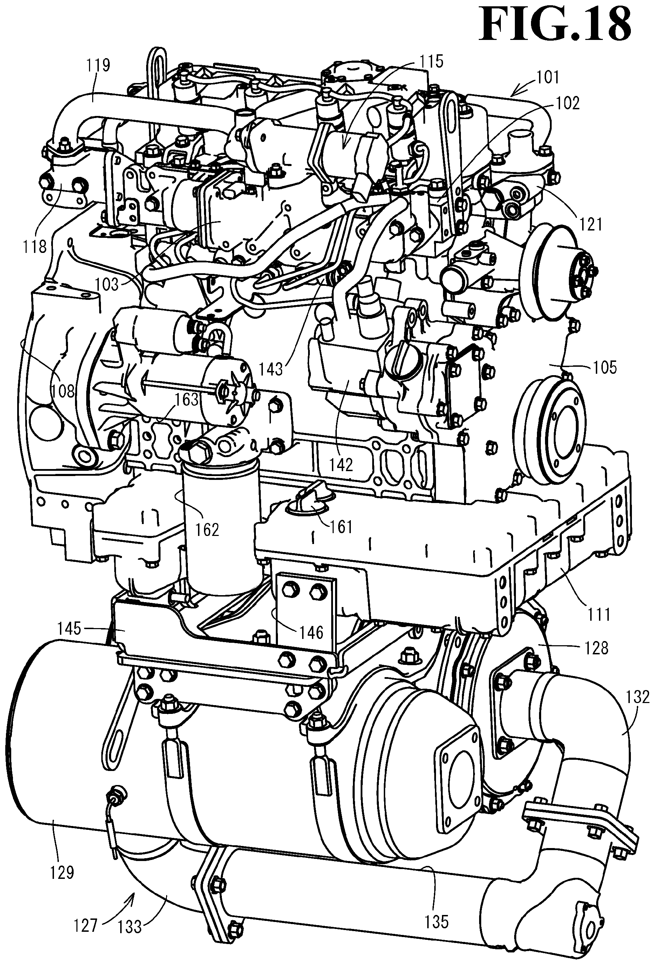

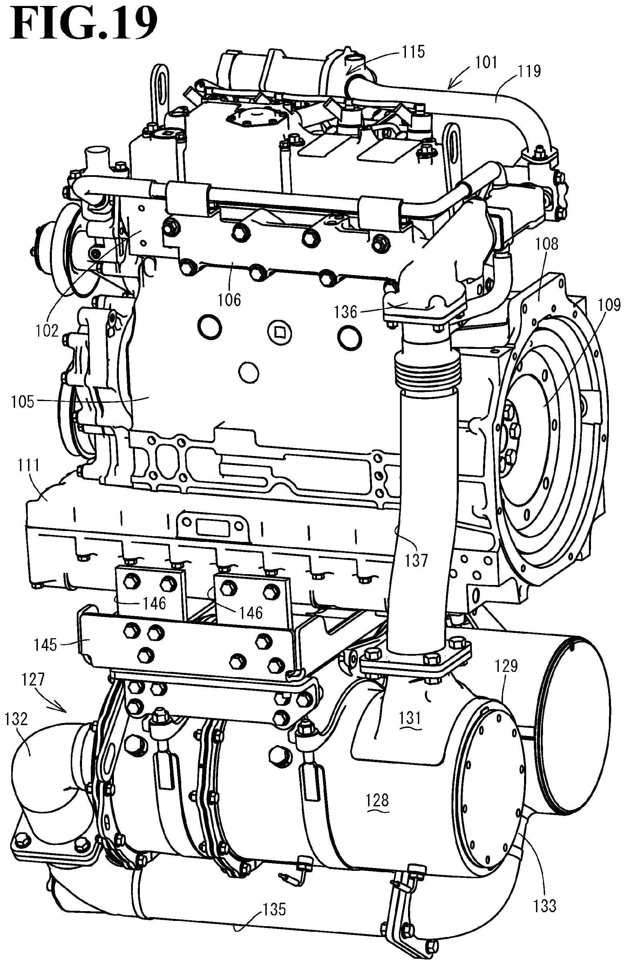

Next, the modified example of the mounting structure of the exhaust gas purification device 127 will be described referring to Figs. 18 and 19. In the third embodiment, the exhaust gas purification device 127 is arranged on the lower surface side of the oil pan 111 in a posture in which the transfer direction of the exhaust gas in the exhaust gas purification device 127 (the first case 128, the second case 129, and the urea mixing pipe 135) is intersected with the engine output shaft 104. However, in the fourth embodiment in Figs. 18 and 19, the exhaust gas purification device 127 is arranged on the lower surface side of the oil pan 111 in a posture in which the transfer direction of the exhaust gas in the exhaust gas purification device 127 (the first case 128, the second case 129, and the urea mixing pipe 135) is parallel to the engine output shaft 104. Also, the DPF inlet pipe 131 of the first case 128 is opened upward while facing the downward opening of the exhaust gas outlet pipe 136 of the exhaust manifold 106, and the upward opening of the DPF inlet pipe 131 is connected to the downward opening of the exhaust gas outlet pipe 136 via the exhaust pipe 137 formed in an approximately straight pipe.

As illustrated in Figs. 18 and 19, the exhaust gas purification device 127 is mounted in a posture in which the transfer direction of the exhaust gas in the exhaust gas purification device 127 is parallel to the output shaft 104 of the diesel engine 101, and the upper end sides of the supporting leg bodies 146 are adhered to the oil pan 111 of the lower portion of the diesel engine 101, and the lower end sides of the supporting leg bodies 146 protrude downward from the oil pan 111 of the lower portion of the diesel engine 101, and the supporting stand 145 is detachably adhered to the lower end sides of the supporting leg bodies 146, thereby mounting the exhaust gas purification device 127. Accordingly, the inlet on the exhaust gas intake side of the exhaust gas purification device 127 can be arranged immediately below the outlet of the exhaust manifold 106 on the left side surface of the diesel engine 101, and the exhaust gas pipe (the exhaust pipe 137) can be constituted in a simple, straight-pipe shape, and the workability in terms of the exhaust gas pipes and the like can be improved.

### Reference Signs List

- 3, 101: Diesel engine
- 47, 127: Exhaust gas purification device
- 48, 128: First case
- 49, 129: Second case
- 59, 135: Urea mixing pipe
- 65, 145: Supporting stand
- 66,146: Supporting leg body

## Claims

1. An engine device configured to include a first case for removing particulate matter in exhaust gas of an engine, and a second case for removing nitride oxides in the exhaust gas of the engine and configured to connect the second case to the first case via a urea mixing pipe, comprising:
a supporting stand configured to adhere in parallel to the first case, the second case, and the urea mixing pipe;
wherein the first case, the second case, and the urea mixing pipe are integrally arranged on the supporting stand, thereby forming an exhaust gas purification device having single component structure, and
wherein the exhaust gas purification device is mounted on supporting leg bodies provided on the engine.

2. The engine device according to claim 1,
wherein the supporting leg bodies are projectingly installed from a lateral surface to an outer side of the engine.

3. The engine device according to claim 2,
wherein the supporting leg bodies protrude from a left side surface of the engine to a left side of outside of the engine, and
wherein the supporting stand is detachably adhered to a protruding tip end side of the supporting leg bodies, and
wherein the exhaust gas purification device is mounted on the left side of the outside of the engine via the supporting leg bodies.

4. The engine device according to claim 2,
wherein the supporting leg bodies protrude from a right side surface of the engine to a right side of outside of the engine, and
wherein the supporting stand is detachably adhered to a protruding tip end side of the supporting leg bodies, and
wherein the exhaust gas purification device is mounted on the right side of the outside of the engine via the supporting leg bodies.

5. The engine device according to claim 1,
wherein the supporting leg bodies protrude downward from a lower surface side of the engine.

6. The engine device according to claim 5,
wherein the exhaust gas purification device is mounted in a posture in which transfer direction of the exhaust gas in the exhaust gas purification device is intersected with an output shaft of the engine, and
wherein an upper end side of the supporting leg bodies is adhered to an oil pan of a lower portion of the engine, and a lower end side of the supporting leg bodies protrudes downward from the oil pan of the lower portion of the engine, and the supporting stand is detachably adhered to the lower end side of the supporting leg bodies, thereby mounting the exhaust gas purification device.

7. The engine device according to claim 5,
wherein the exhaust gas purification device is mounted in a posture in which transfer direction of the exhaust gas in the exhaust gas purification device is parallel to an output shaft of the engine, and
wherein an upper end side of the supporting leg bodies is adhered to an oil pan of a lower portion of the engine, and a lower end side of the supporting leg bodies protrudes downward from the oil pan of the lower portion of the engine, and the supporting stand is detachably adhered to the lower end side of the supporting leg bodies, thereby mounting the exhaust gas purification device.
